**Europäisches Patentamt**

**European Patent Office**

**Office européen des brevets**

(11) Numéro de publication: **0 102 258**
**A1**

# (12) DEMANDE DE BREVET EUROPEEN

(21) Numéro de dépôt: **83401340.1**

(22) Date de dépôt: **29.06.83**

(51) Int. Cl.³: **A 01 K 45/00**
**A 61 D 7/02**

(30) Priorité: **20.07.82 FR 8212633**

(43) Date de publication de la demande:
**07.03.84 Bulletin 84/10**

(84) Etats contractants désignés:
**BE DE GB IT NL**

(71) Demandeur: **Danno, Louis**
**Bel Orient**
**L'Hermitage-Lorges (22)(FR)**

(71) Demandeur: **Danno, Maurice**
**Launoy Guen**
**Piemet (22)(FR)**

(72) Inventeur: **Danno, Louis**
**Bel Orient**
**L'Hermitage-Lorges (22)(FR)**

(72) Inventeur: **Danno, Maurice**
**Launoy Guen**
**Piemet (22)(FR)**

(74) Mandataire: **Rodhain, Claude**
**Cabinet Claude RODHAIN 30, rue La Boétie**
**F-75008 Paris(FR)**

(54) **Pupitre d'insémination pour batterie de cages, notamment d'oiseaux.**

(57) L'invention concerne un pupitre d'insémination pour batterie de cages utilisé notamment en agriculture pour la reproduction e l'élevage d'oiseaux tels que poules, pintades, dindes, faisans, ou autres animaux domestiques ou élevés.

Le pupitre est caractérisé en ce qu'il est constitué d'un support (1) fixé de façon amovible sur l'un ou l'autre des côtés latéraux du chariot mobile (2), ce support portant d'une part, un siège (4), réglable en hauteur, pour correspondre aux différents étages de rangées de cages, et d'autre part, une desserte (5) également réglable par rapport au support (1) entraîné avec le chariot d'alimentation (2).

Ce pupitre d'insémination est particulièrement destiné aux batteries de cages utilisées en aviculture.

FIG.1

0102258

"Pupitre d'insémination pour batterie de cages, notamment d'oiseaux ".

L'invention concerne un pupitre d'insémination pour batterie de cages utilisé notamment en agriculture pour la reproduction et l'élevage d'oiseaux tels que poules, pintades, dindes, faisans, ou autres animaux domestiques ou élevés.

On utilise fréquemment pour la reproduction et l'élevage d'animaux tels que les volatiles, des batteries de cages se présentant généralement sous la forme de rangées de cages juxtaposées et superposées en plusieurs niveaux pour former des ensembles longilignes dont les deux faces longitudinales sont pourvues de cages accessibles de l'extérieur, grâce à des portes coulissantes ou ouvrantes. Ces batteries comportent, à chaque niveau de cages,des mangeoires continues,défilant devant chaque rangée de cages,lesdites mangeoires étant alimentées en produits ou substances alimentaires et/ou médicamenteuses à l'aide d'un chariot surplombant les cages et distribuant les produits ou substances dans les mangeoires situées de chaque côté longitudinal de la batterie. Le chariot est déplacé de façon continue ou par intermittence le long de la batterie de cages à partir d'une commande électrique, par exemple un bouton-poussoir.

Il est nécessaire dans des installations de cette nature, de disposer d'un matériel annexe permettant à l'opérateur de pouvoir travailler devant chacune des cages puisqu'il doit, au cours de l'insémination artificielle, saisir les animaux, les immobiliser, les inséminer et les libérer en les réintroduisant dans leur cage respective. L'opérateur doit donc disposer d'un matériel adapté à ces multiples manipulations et c'est par conséquent un objet essentiel de l'invention que de doter ces batteries de cages d'un pupitre de travail permettant à l'opérateur de pouvoir travailler dans les meilleures conditions quel que soit le niveau de cages qu'il doit traiter.

L'invention concerne donc un pupitre d'insémination pour batterie de cages utilisées notamment en aviculture pour la reproduction et l'élevage d'oiseaux tels que poules, pintades, dindes ou faisans, ces batteries étant composées de rangées superposées de cages juxtaposées, chaque rangée étant bordée d'une mangeoire continue, alimentée en produits alimentaires ou en substances de traitement par un chariot surplombant les mangeoires, et entraîné en déplacement intermittent devant les cages par une commande électrique à bouton poussoir, pupitre caractérisé en ce qu'il est constitué d'un support fixé de façon amovible sur l'un ou l'autre des côtés latéraux du chariot mobile, celui-ci comportant d'une part, un siège réglable en hauteur, pour correspondre aux différents étages de rangées de cages et, d'autre part, une desserte également réglable par rapport au support entraîné avec le chariot d'alimentation.

Suivant un mode de réalisation de l'invention, le support est constitué d'un montant pourvu d'une série d'orifices servant de glissières et de profilés de guidage du siège et de la desserte, ce montant étant relié à une traverse pourvue de doigts d'accrochage venant se fixer sur le bord latéral du chariot d'alimentation.

Un pupitre d'insémination conforme à l'invention est représenté à titre d'exemple non limitatif sur les figures ci-jointes dans lesquelles :

- La figure 1 est une vue en perspective du pupitre vu selon un mode de réalisation préférentiel,

- La figure 2 est une vue frontale schématique d'une batterie de cages illustrant deux des trois positions pouvant être exploitées par l'opérateur.

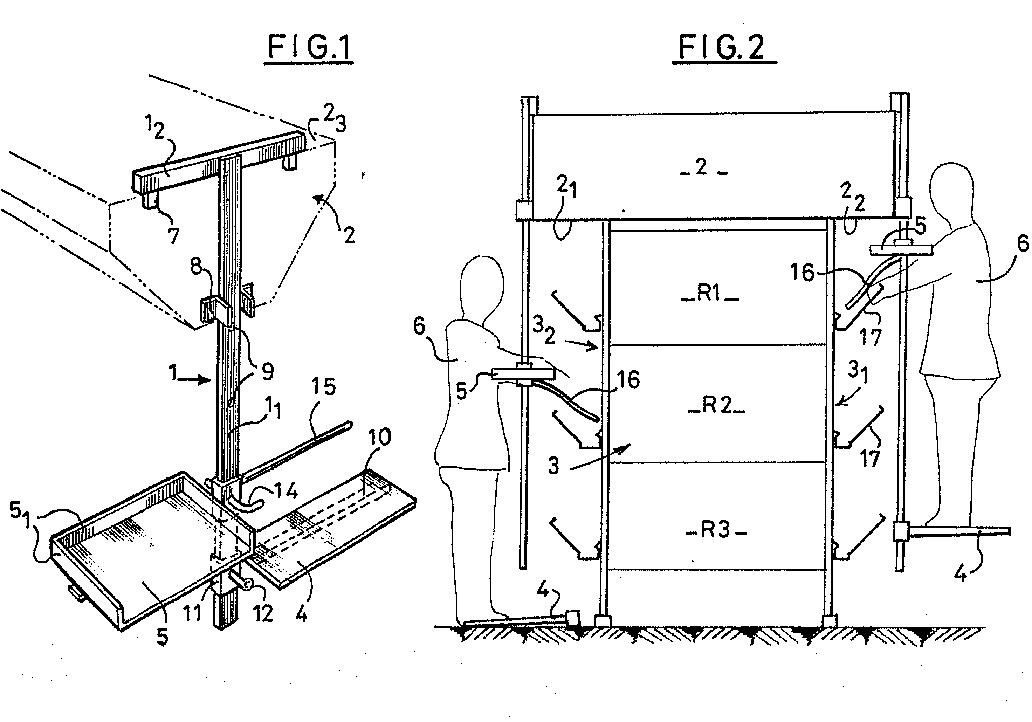

Comme illustré sur les dessins annexés, le pupitre d'insémination conforme à l'invention est constitué essentiellement d'un support 1 ayant la forme générale d'un T pouvant être fixé de façon amovible sur le chariot d'alimentation 2 se déplaçant parallèlement à la batterie de cages 3, le montant principal 1 de ce support servant de glissière à une tablette ou siège 4 réglable en hauteur par rapport au montant, afin que celui-ci puisse occuper, dans l'exemple considéré, au moins trois niveaux correspondant aux rangées de cages R1, R2, R3 de la batterie 3. Ce montant 1 sert également de glissière à une desserte 5 destinée à recevoir le matériel et instruments utiles à l'opérateur schématisé en 6 (figure 2).

Dans le détail, le support est constitué, comme indiqué précédemment, d'un montant 1 se présentant sous la forme d'un profilé métallique par exemple de section rectangulaire, ce profilé étant raccordé à une traverse $1_2$, orientée perpendiculairement au montant, cette traverse comportant sous sa face inférieure deux doigts d'accrochage 7 venant se loger par exemple dans des orifices de forme complémentaire prévus sur la face supérieure $2_1$ du chariot 2 à proximité du bord latéral du dit chariot. Le montant 1 est maintenu dans un plan vertical par le jeu de deux pattes 8 en forme d'équerre dont l'une des ailes est soudée, rivetée ou vissée sur la face frontale du chariot. Ces ailes en saillie maintiennent le montant 1 dans un plan vertical et évitent notamment le déboîtement des doigts d'accrochage 7. Enfin, ce montant 1 comporte des orifices 9 le traversant de part en part, ces orifices étant, dans le cas considéré, au nombre de quatre, la distance les séparant correspondant sensiblement à la hauteur d'une rangée de cages.

Le siège ou marchepied 4 se présente sous la forme d'un plateau fixé sur une traverse 10 par vissage ou boulonnage, cette traverse étant solidaire d'un manchon 11 ayant une section correspondant à celle du montant 1 de manière à ce que celui-ci puisse glisser, tout en étant guidé, sur ledit montant, une broche 12 permettant d'immobiliser le plateau 4 dans la position choisie, par introduction de cette broche dans l'un quelconque des orifices 9.

La desserte 5 se présente également sous la forme d'un plateau dont au moins trois bords $5_1$ sont relevés à angle droit, ce plateau étant également solidaire d'un manchon 13 similaire au manchon 11, pouvant être immobilisé en toute position relative par rapport au montant 1 par une broche 14.

Ce manchon 13 reçoit par ailleurs une traverse 15 sur laquelle est fixée une planchette 16, en forme de

0102258

toboggan, comme visible en figure 2. Cette planchette est inclinée vers le bas en direction des cages et sert à recevoir de façon connue les animaux à inséminer et est dotée de moyens de contention ou de retenue venant enserrer les pattes des animaux afin de les maintenir prisonniers pendant l'insémination artificielle après quoi ces moyens sont libérés, la forme de la planchette, s'apparentant à un toboggan, réintroduisant tout naturellement les animaux dans leur cage respective.

Le pupitre selon l'invention qui est accroché au chariot de distribution d'oeufs se déplace avec celui-ci, lequel chariot défile devant les cages selon un déplacement continu ou intermittent. Il n'est pas utile de décrire les moyens de déplacement et de commande du chariot, ce système étant parfaitement connu des spécialistes, l'entraînement pouvant se faire par vérin, par chaîne, par courroie ou autres. L'opérateur 6 dispose d'une commande à bouton-poussoir permettant l'entraînement intermittent du chariot lorsqu'il veut passer d'une cage à une autre après que l'opération d'insémination artificielle ait été réalisée.

Comme on le voit sur la figure 2, la batterie de cages 3 est formée de trois doubles rangées de cages superposées R1, R2, R3, ces cages étant contigües les unes aux autres pour former un ensemble parallélipipédique de forme longiligne, les portes des cages qui peuvent être à glissières ou à articulations étant accessibles de l'extérieur de chaque côté longitudinal $3_1$ et $3_2$ de la batterie. Ces deux côtés longitudinaux $3_1$, $3_2$ sont bordés par des mangeoires 17 s'étendant sur toute la longueur de la batterie et permettant aux volatiles de pouvoir s'alimenter dans cette mangeoire en passant leur tête et leur cou à travers les barreaux des cages. Le chariot d'alimentation 2 servant à distribuer des produits alimentaires et/ou des substances médicamenteuses surplombe la batterie de cages et déborde de chaque côté longitudinal $3_1$, $3_2$ de la batterie afin de pouvoir déverser par ses extrémités en saillie $2_1$, $2_2$ les produits ou substances dans les mangeoires 17.

On observe sur cette figure 2 que le pupitre d'insémination est fixé de façon amovible sur les faces latérales du chariot, celui-ci se déplaçant parallèlement aux côtés longitudinaux de la batterie et entraînant, par voie de conséquence, le pupitre d'insémination qui lui est solidaire.

Bien entendu, pendant la période d'insémination, le chariot d'alimentation 2 ne distribuera pas d'aliments et sera uniquement utilisée comme moyen de déplacement du pupitre. Sur le plan fonctionnel, l'opérateur devra pour inséminer la rangée R1 du haut, positionner le siège ou marchepied 4 à sa position la plus basse de manière à travailler debout comme illustré sur le dessin. Dans cette position, la desserte 5 et la planchette-toboggan 16 seront quant à eux amenés à leur position la plus haute de manière à ce que l'opérateur ait à sa disposition les instruments et matériels nécessaires à l'insémination, la planchette 16 étant quant à elle, située en regard de l'ouverture de la cage après retrait de la porte.

L'insémination de la rangée centrale $R_2$ se fera par retrait du siège 4 qui deviendra alors réutilisable, la desserte 5 et la planchette 16 étant quant à elles amenées dans la position intermédiaire comme visible sur le dessin.

Enfin l'insémination de la rangée de cages inférieure R3 se fera en position assise, l'opérateur laissant le siège 4 dans la position utilisée pour l'insémination de la rangée supérieure R1, mais amenant la desserte 5 et la planchette 16 en regard des portes des cages de la rangée R3.

Dans tous les cas, l'inséminateur ouvrira la porte de la cage, prendra les volatiles qui y sont logés les positionnera sur la tablette d'insémination 16, les immobilisera par les pince-pattes usuellement utilisés et procédera ensuite à l'insémination. Lorsque l'opération aura été effectuée, il neutralisera les pince-pattes pour libérer les volatiles qui, par simple glissement, seront réintroduits dans leur cage respective. L'opérateur appuiera ensuite sur le bouton de commande de la goulotte ou chariot d'alimentation 2 pour le déplacer d'une largeur de cage (50 cm environ) afin de procéder à une nouvelle insémination.

Lorsque l'insémination de toutes les cages d'une même face ou d'un même côté longitudinal 31 a été réalisée, l'opérateur pourra décrocher le pupitre d'insémination par simple déplacement angulaire vers le haut et le fixer sur la face ou le côté longitudinal opposé et procèdera de la manière indiquée précédemment.

Ce dispositif à commande semi-automatique permet ainsi un gain de temps appréciable et permet par voie de conséquence de n'utiliser qu'un seul opérateur là où il en fallait naguère deux ou trois. En outre, l'inséminateur travaille dans des conditions idéales puisqu'il à portée de la main ses instruments, les volatiles et les moyens de les neutraliser pendant l'opération d'insémination, leur réintroduction dans leur cage se faisant automatiquement par simple gravité sans effet de stress sur les animaux.

REVENDICATIONS

1. Pupitre d'insémination pour batterie de cages utilisées notamment en aviculture pour la reproduction et l'élevage d'oiseaux tels que poules, pintades, dindes ou faisans, ces batteries étant composées de rangées superposées de cages juxtaposées, chaque rangée étant bordée d'une mangeoire continue alimentée en produits alimentaires ou en substances de traitement par un chariot surplombant les mangeoires, et entraîné en déplacement intermittent devant les cages, par une commande électrique à bouton-poussoir, pupitre caractérisé en ce qu'il est constitué d'un support (1) fixé de façon amovible sur l'un ou l'autre des côtés latéraux du chariot mobile (2), ce support portant d'une part, un siège (4), réglable en hauteur, pour correspondre aux différents étages (R1, R2, R3) de rangées de cages, et d'autre part, une desserte (5) également réglable par rapport au support (1) entraîné avec le chariot d'alimentation (2).

2. Pupitre selon la revendication 1, caractérisé en ce que le support est constitué d'un montant (1) pourvu d'une série d'orifices (9) servant de glissières et de profilés de guidage du siège (4) et de la desserte (5), ce montant étant relié à une traverse ($1_2$) pourvue de doigts d'accrochage (7) venant se fixer sur le bord latéral du chariot d'alimentation (2).

3. Pupitre selon l'une quelconque des revendications 1 et 2, caractérisé en ce que le siège est constitué d'un plateau fixé sur une traverse (10) elle-même solidaire d'un manchon (11) monté coulissant sur le montant (1) du support, ce manchon comportant un orifice dans lequel pénètre une broche (12) d'immobilisation venant se loger dans l'un quelconque des orifices (9) du montant.

4. Pupitre selon la revendication (1) caractérisé en ce que la desserte est constituée d'un plateau (5) dont trois des côtés ($5_1$) sont relevés à angle droit pour former un réceptacle, cette desserte étant solidaire d'un manchon (13) monté coulissant sur le montant (1) du support, ce manchon étant immobilisé en toute position relative par rapport audit montant par une broche (14) traversant le manchon et venant se loger dans l'un quelconque des orifices (9) du montant.

5. Pupitre selon la revendication (4), caractérisé en ce que manchon (13) est solidaire d'une traverse (15) servant à la fixation d'une planchette (16) en forme de toboggan, connu en soi.

6. Pupitre selon l'une quelconque des revendications 1 à 5, caractérisé en ce que le montant (1) est maintenu en position verticale évitant son déboîtement par deux pattes en forme d'équerre fixées sur la face frontale du chariot d'alimentation.

7. Pupitre selon l'une quelconque des revendications 1 à 6, caractérisé en ce qu'il est entraîné par le chariot d'alimentation qui sert de moyen de commande à déplacement intermittent, le pupitre pouvant être aisément et par simple déplacement angulaire, déboîté pour être amené d'une des faces frontales du chariot à l'autre face frontale, permettant de desservir alternativement les deux côtés longitudinaux $(3_1, 3_2)$ des rangées de cages (R1, R2, R3).

8. Pupitre conforme à l'une quelconque des revendications 1 à 7, caractérisé en ce que le siège et la desserte peuvent être amenés individuellement à des niveaux différents pour permettre à l'opérateur de travailler en position debout ou assise tout en ayant son matériel d'insémination à portée de la main.

FIG.1                    FIG.2

1/1

0102258

**0102258**

Office européen
des brevets

**RAPPORT DE RECHERCHE EUROPEENNE**

Numéro de la demande

EP 83 40 1340

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-3 872 869 (RANDOLPH) | | A 01 K 45/00<br>A 61 D 7/02 |
| A | FR-A-2 104 000 (LOHMANN) | | |
| A | US-A-3 018 759 (HELBIG) | | |
| | ----- | | |

|  |  |  | **DOMAINES TECHNIQUES RECHERCHES (Int. Cl. ³)**<br><br>A 01 K<br>A 61 D |
|---|---|---|---|

Le présent rapport de recherche a été établi pour toutes les revendications

| Lieu de la recherche<br>LA HAYE | Date d'achèvement de la recherche<br>26-10-1983 | Examinateur<br>VILBIG K |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

\& : membre de la même famille, document correspondant

OEB Form 1503. 03.82